# EUROPEAN PATENT SPECIFICATION

(11) **EP 4 363 737 B1**
(45) Date of publication and mention of the grant of the patent: **04.03.2026**
(21) Application number: 22737964.1
(22) Date of filing: 29.06.2022
(51) Int. Cl.: F16D 69/00, F16D 65/04, F16D 65/092, F16D 69/04

(54) **BRAKE PAD UNIT AND A METHOD OF MANUFACTURE OF A BRAKE PAD UNIT**
BREMSBELAGEINHEIT UND VERFAHREN ZUR HERSTELLUNG EINER BREMSBELAGEINHEIT
UNITÉ DE PLAQUETTE DE FREIN ET PROCÉDÉ DE FABRICATION D'UNE UNITÉ DE PLAQUETTE DE FREIN

(30) Priority: 02.07.2021 GB 202109621
(43) Date of publication of application: 08.05.2024
(73) Proprietor: Tribol Braking Ltd, Dawlish EX7 0JQ (GB)
(72) Inventor: SAVAGE, Luke, Dawlish Devon EX7 0JQ (GB); GOMBOS, Zoltan, Bourne End Buckinghamshire SL8 5SR (GB)
(74) Representative: Handsome I.P. Ltd
(86) International application number: PCT/GB2022/051677
(87) International publication number: WO 2023/275550

(56) References cited:
- WO-A1-2015/173768
- GB-A- 2 003 088
- US-A- 5 984 055
- US-A1- 2019 003 545

## Description

The present invention relates to a brake pad unit and to a method of manufacture of a brake pad unit.

In particular the invention is concerned with a brake pad unit for a disc brake assembly, the brake pad unit comprising a backing plate and a friction pad.

### Background

Conventional automotive brake pads consist of a friction material bonded to a mild steel backing plate. Various innovations have been made to reduce the weight of the brake pad by altering the design of the steel backing plate, for example using a hollow metallic structure filled with polymeric matrix composite material. Others comprise a non-compressible core material which is sandwiched between two sheet metal stampings. Further examples include a metal reinforcing material embedded in thermosetting resin.

A problem with these solutions is that while reducing the extent of the metal reinforcement helps to reduce weight, doing so reduces the strength of the brake pad and increases the chance of the backing plate warping. This may result in the friction material being fractured, which reduces braking ability. Alternatively, this may result in the brake pad getting stuck in the disc brake assembly it is used with, which complicates maintenance. Additionally, because metal parts are used in the described methods, corrosion and catalytic reaction are an issue. For example, corrosion and/or catalytic reactions may degrade the brake pad units that include metal parts.

Hence a brake pad unit which significantly reduces the weight of the brake backing plate but also solves the warping, bending, corrosion and catalytic reaction issues, encountered by examples of the related art, is highly desirable.

US5984055A relates to an integrated brake pad and back plate having a brake pad section formed from a first fiber reinforced ceramic matrix composite (FRCMC) material and a back plate section formed from a second FRCMC material. The brake pad and back plate are allegedly integrated because the sections are molded together to form an integral, unitary structure. The first FRCMC material used in the brake pad section includes a pre-ceramic resin in its ceramic state, fibers and possibly a filler material. The types and amount of these constituents are generally chosen so as to impart characteristics desirable in brake pads, such as high temperature and erosion resistance, and a high coefficient of friction. The second FRCMC material used in the back plate section includes a pre-ceramic resin in its ceramic state and fibers. In this case, the types and amounts of the constituents making up the second FRCMC material are disclosed to be generally chosen to impart the strength to the back plate section necessary to withstand compressive and bending forces placed upon it during braking.

GB2003088A relates to a disc brake pad in which a backplate comprising an organic resin is used. GB2003088A refers to a method of forming a disc brake pad comprising a friction layer and a backplate, and discloses that the backplate and the friction material use a common resin binder.

WO2015173768A1 relates to a friction assembly comprising a support plate and at least one brake pad, made by co-moulding of at least one heat-resistant resin, the heat-resistant resin of the support plate being partially loaded with non- metallic reinforcement fibres. The support plate identifies one or more accessory connection seat, made by co-moulding. This document further relates to a method for the manufacture of a friction assembly and a brake calliper.

### Summary

According to the present invention there is provided brake pad unit according to independent claim 1 and a method of manufacturing the same according to independent claim 13. Other features of the invention will be apparent from the dependent claims, and the description which follows.

Hence there is provided a brake pad unit 100 for a disc brake assembly with a configuration which means it may be produced to have a weight which is less, and stiffness which is at least as high as, examples of the related art. A brake pad unit according to the present invention is inherently non-metallic and thereby highly corrosion resistant, with therefore negligible emissions of corrosion products into the environment. The non-metallic brake pad unit is also resistant to catalytic reaction.

### Brief Description of the Drawings

Examples of the present invention will now be described with reference to the accompanying drawings, in which:
Figure 1 shows a first example of a brake pad unit according to the present invention;
Figure 2 shows a second example of a brake pad unit according to the present invention;
Figure 3 shows an exploded view of the arrangement in Figure 2;
Figure 4 shows a plan view of a backing plate layer according to the present invention in which reinforcement fibres are randomly oriented;
Figures 5, 6 show different thickness examples of the backing plate layer of Figure 4;
Figure 7 shows a plan view of a backing plate layer according to the present invention comprising unidirectional (UD) continuous fibres;
Figure 8 shows an example of the backing plate layer of Figure 7, and/or part of a backing plate, which consists of a single layer of unidirectional (UD) continuous fibres;
Figure 9 shows an example of the backing plate layer of Figure 7, and/or part of a backing plate, which consists of several integrally formed layers of unidirectional (UD) continuous fibres;
Figure 10 shows an example of a backing-plate layer made from woven continuous fibres;
Figure 11 shows an example of the backing plate layer of Figure 10, and/or part of a backing plate, which consists of several integrally formed layers of woven continuous fibres;
Figure 12 shows an example of the backing plate layer of Figure 10, and/or part of a backing plate, which consists of a single layer of woven continuous fibres;
Figure 13 shows a third example of a brake pad unit according to the present disclosure;
Figure 14 illustrates a first example of a method of manufacture;
Figure 15 illustrates a second example of a method of manufacture; and
Figure 16 illustrates a third example of a method of manufacture.

### Detailed Description

The present invention relates to a brake pad unit 100. A brake pad unit 100 according to the present disclosure may, in use, form part of a disc brake assembly for use, for example, on an automobile or other vehicle. The brake pad unit 100 comprises a backing plate 200 and a friction pad 300. The details of the disc brake assembly are not required to understand the features of the brake pad unit 100, and hence is not described.

The brake pad unit 100 may be retrofittable to existing disc brake assemblies, and be used with conventional disc brake assembly designs, including, but not limited to, regenerative brake systems. Hence the brake pad unit may be assembled together with other common features of disc brake assemblies, for example wear sensors to monitor the remaining lifetime of the unit.

The brake pad unit 100 of the present invention provides a solution configured to significantly reduce the weight of the brake backing plate 200 as well as reducing the likelihood of warping and bending of the brake pad unit 100. In addition, since a brake pad unit according to the present disclosure is inherently non-metallic, it provides a corrosion-free solution, reducing maintenance and requiring less frequent replacement than examples of the related art. This is of particular relevance to electric vehicles that employ regenerative braking systems. This is because duty cycles of brakes of electric vehicles are markedly reduced, and hence operational life significantly extended, compared to conventional "foundation" braking systems, and hence brake pad unit replacement may be far less frequent. The absence of metallic material in a backing plate of the present invention therefore means it will not corrode, regardless of how long it is in place in the braking system. As will be described, the brake pad unit 100 of the present disclosure utilises a polymer composite comprising a fibre reinforced polymer resin binder. Those skilled in the art will appreciate that a composite material is formed by combining two or more different materials, each with its own characteristic properties. Combining the two or more different materials results in a composite material, which may have improved properties for certain applications. As referred to herein, references to a composite backing plate, backing plate formed from a composite material, and the like relate to a backing plate made from a composite material formed by combining two or more different material. For example, a backing plate made of steel only is not a composite backing plate. Steel is an alloy and not a composite material, as those skilled in the art will appreciate. In the examples described herein a multi-material solid polymer composite is used for the backing plate, which consists of non-metallic fibres and non-metallic polymer matrices (e.g., comprising non-metallic resin(s) and/or acting as binder(s)).

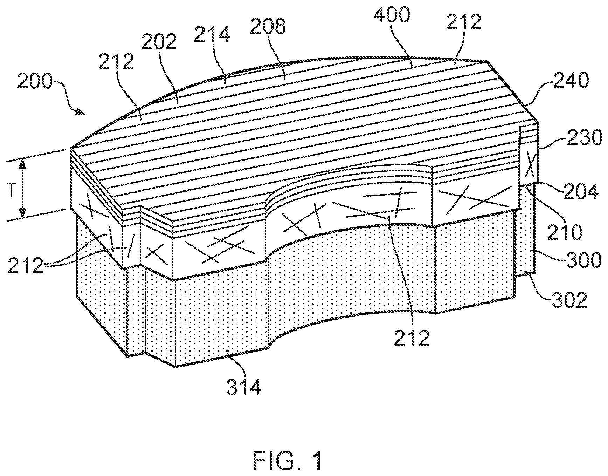

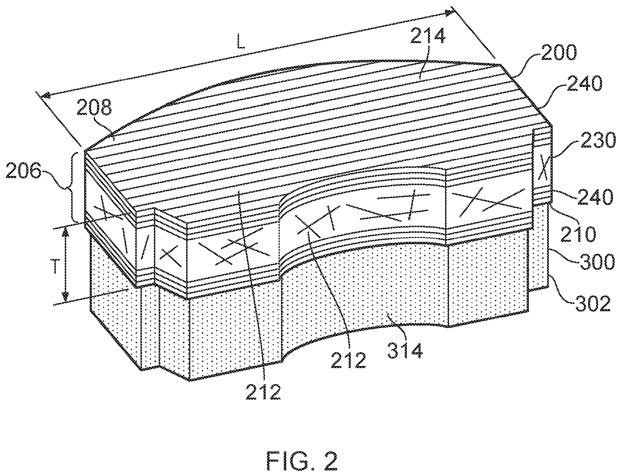

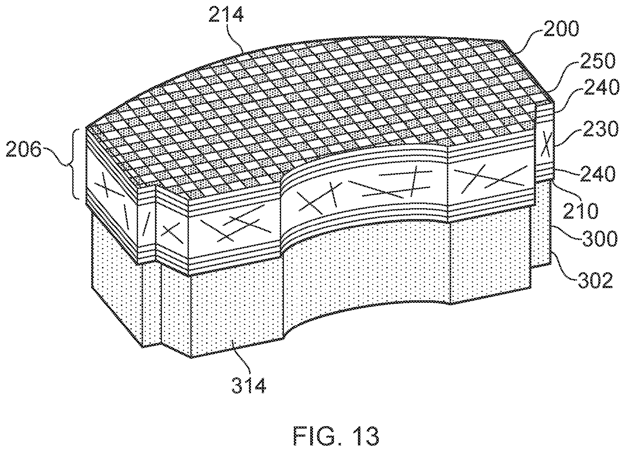

Figure 1 shows a first example of a brake pad unit 100 according to the present disclosure. Figure 2 shows a second example of a brake pad unit 100 according to the present disclosure. Figure 13 shows a third example of a brake pad unit 100 according to the present disclosure.

As shown, the backing plate 200 may be flat (i.e. in planar, extending in a flat plane). The backing plate 200 comprises a first side 202 and a second side 204 such that the first side 202 and second side 204 provide surfaces on opposite sides of the backing plate 200. As shown in Figures 2, 4 to 6, 7 to 9, 10 to 12 the sides 202, 204 have a nominal length L and a nominal width W. The sides 202, 204 may have the same nominal length L and nominal width W. Hence the backing plate 200 may have a nominal length L and a nominal width W. An edge wall 206 (which may comprise several layers, for example as shown in Figures 1, 2, 13) extends between the sides 202, 204, and the edge wall 206 defines a thickness T of the backing plate 200. As shown, the backing plate 200 may have uniform thickness. Hence the edge wall 206 may extend the full thickness T of the backing plate 200.

As shown in the figures, the Length L and Width W refer to the dimensions of the backing plate layers which relate to attributes that can reasonably be thought of as Length and Width. For example, Length L is between the limits defined by the edge wall 206 at opposite ends of the backing plate, and Width W is a dimension perpendicular to the Length L between opposing sides of the edge wall 206.

As shown in Figure 1, the first side 202 defines an engagement surface 208 for engaging with the disc brake assembly. That is to say, the engagement surface 208 defines a free side of the backing plate 200 which, in use, may locate against a part of the disc brake system to which it is fitted. The second side 204 defines a friction material mounting surface 210. Hence the friction pad 300 is provided on the friction material mounting surface 210.

The backing plate 200 is a composite backing plate. The backing plate 200 may comprise reinforcement fibres 212 and a polymer matrix, for example. For example, the backing plate 200 may comprise a polymer matrix which comprises a resin and/or a polymer matrix which acts as a binder. Some of the examples described herein are in the context of the polymer matrix being a binder, however, the polymer matrix may be any kind of polymer matrix described herein.

According to the invention, the backing plate 200 is formed from a composite material 214 comprising reinforcement fibres 212, wherein the composite material 214 extends throughout the whole of the backing plate 200. In other words, the backing plate 200 is formed from a composite material 214 comprising reinforcement fibres 212, wherein the composite material 214 is present throughout the entirety of the backing plate 200. That is to say, the composite material 214 comprising the reinforcement fibres 212 extends the length and the width of the backing plate 200. Put another way, composite material 214 (comprising the reinforcement fibres) is present throughout the whole of the volume of material which forms the backing plate 200. Put another way, the composite material 214 comprising the reinforcement fibres 212 is present throughout the entirety of the backing plate 200. In other words, there is no region of the backing plate that is devoid of the composite material 214. The backing plate 200 comprises only the reinforcement fibres 212 and a polymer matrix (e.g., comprising a resin and/or acting as a binder material). For example, the backing plate 200 only comprises the composite material 214 comprising the reinforcement fibres 212 and a binder material. That is to say, the backing plate (and hence brake pad) does not include any further materials, for example metallic elements. That is to say, the backing plate (and hence brake pad) may consist of only non-metallic materials.

The backing plate 200 comprises a first and a second layer of reinforcement fibres 212 and a binder material, each with a thickness T-layer, where the sum of the thickness of the layers equals the thickness T of the backing plate 200. The layers may comprise the reinforcement fibres 212 provided in different structures, as described below. For example, as discussed below, the backing plate comprises a layer 230 of reinforcement fibres 212 provided in a randomly oriented fibre lay-up pattern. For example, as discussed below, the backing plate 200 comprises a layer 240, 250 of reinforcement fibres 212 which are provided as continuous fibres.

In the figures the fibres 212 are represented as spaced apart lines, which is purely diagrammatic to represent the different forms/lay ups of the fibres in each layer.

The fibres may be provided in bundle / tow form.

The friction pad 300 comprises a friction material 302. The friction pad 300 is provided on the friction material mounting surface 210 of the backing plate 200. The friction material 302 may be formed from a composite material 314 comprising a particulate powder.

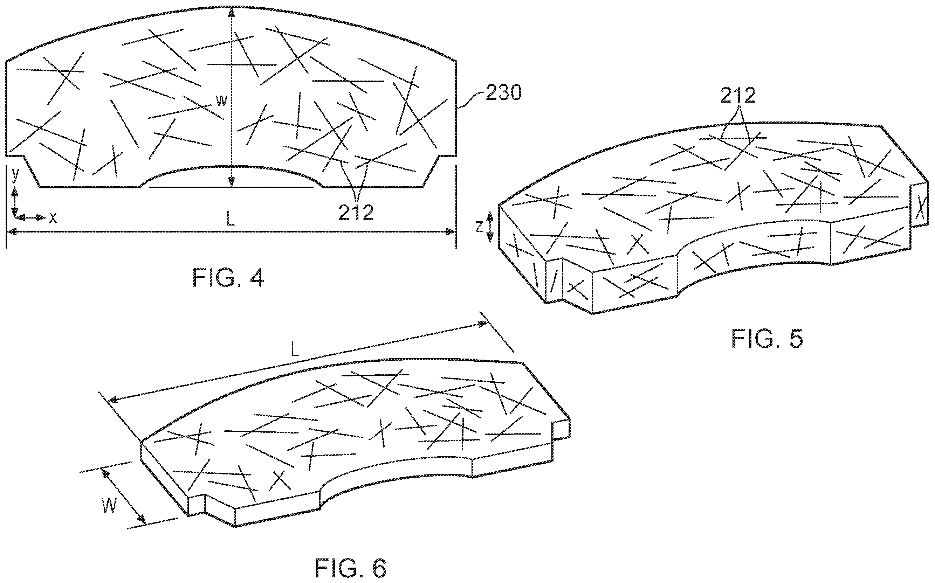

As shown in Figures 1, 2, 3, 13 the backing plate 200 comprises a layer 230 of reinforcement fibres 212 provided in a randomly oriented fibre lay-up pattern. An example of this randomly oriented fibre layer 230 is shown in Figures 4 to 6. In such an arrangement, the reinforcement fibres 212 may have a length of at least 12mm but not more than 50mm. In one example, the fibres extend less than the length L of the backing plate and/or extend less than the width W of the backing plate. In another example, the fibres have a length less than the width W of the backing plate.

In some examples, the layer 230 of the randomly oriented reinforcement fibres may be formed using a composite material containing reinforcement fibres which are short enough such that said composite material may be moulded into various different shapes. For example, the fibre may have lengths as described above in relation to the layer 230.

Such a composite material may be referred to as a moulding compound, as those skilled in the art will appreciate. The fibres in the moulding compound may be referred to as discontinuous due to their shorter length, as those skilled in the art will appreciate. The moulding compound may also comprise a polymer matrix (e.g., comprising a resin and/or acting as a binder). The layer 230 may be formed by using any means which provide the described structure of the layer 230.

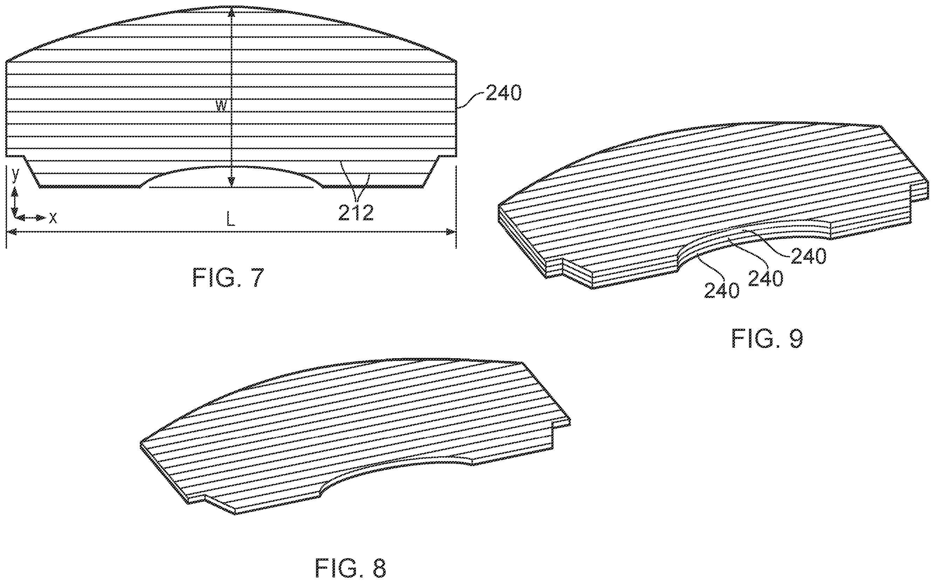

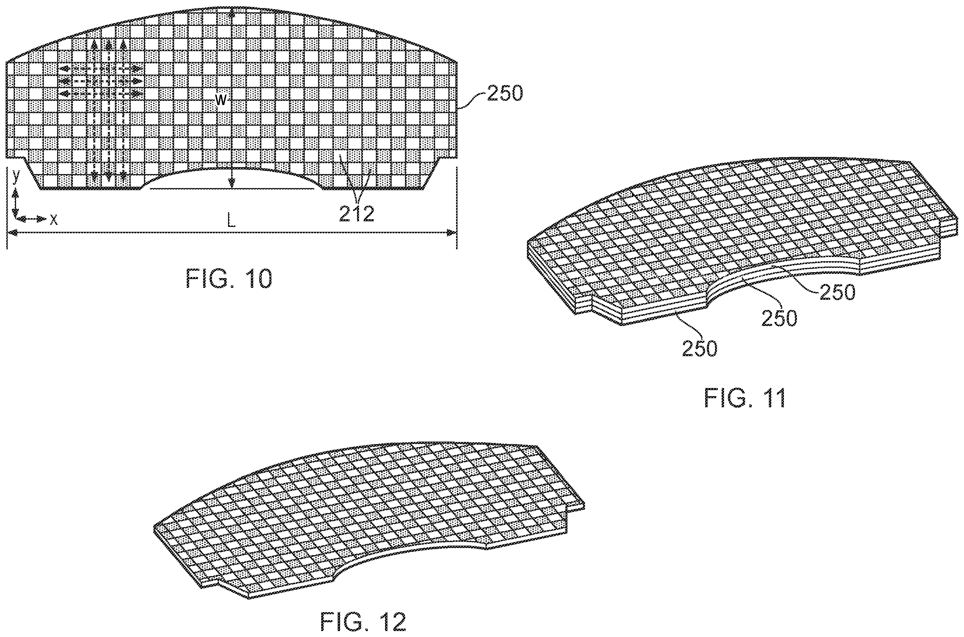

The backing plate 200 comprises a layer of reinforcement fibres 212 which are provided as continuous fibres 212 such that they extend unbroken (i.e., such that they are continuous) from a first location on an edge wall of the backing plate 200 to a second location on the edge wall. In other words, there are no breaks in the continuous fibres between the first location and the second location, for example. As shown in Figures 1 to 3, 13 the backing plate 200 may comprise a layer 240 of reinforcement fibres 212 which are provided as continuous fibres which extend from a first point on the edge wall 206 to a second point on the edge wall 206. Put another way, the backing plate 200 comprises a layer of reinforcement fibres 212 which are provided as continuous fibres which each extend through the layer of the backing plate 200, each fibre starting at a location on the edge wall 206 of the layer and finishing at another location on the edge wall of the layer. Examples of this are shown in Figures 7 to 9 for a layer 240 and Figures 10 to 12 for a layer 250. The continuous fibre layer 250 also comprises reinforcement fibres 212 which are provided as continuous fibres which extend from a first point on the edge wall 206 to a second point on the edge wall 206, as described in relation to the reinforcement fibre layer 240. In some examples, the continuous fibre layer 240 and/or the continuous fibre layer 250 may be formed using one or more pre-impregnated fibre layers (prepreg). For example, the continuous fibre layer 240 and/or the continuous fibre layer 250 may be a cured prepreg layer. Those skilled in the art will appreciate that pre-impregnated fibre layers may comprise fibres and a partially cured polymer matrix (e.g., comprising a resin and/or acting as a binder) and a pre-impregnated fibre layer is referred to as a B-Stage material. For example, the one or more pre-impregnated fibre layers may be cured during manufacture of the backing plate 200 to provide the continuous fibre layer 240 and/or the continuous fibre layer 250.

In some other examples, the continuous fibre layer 240 and/or the continuous fibre layer 250 may be formed using one or more fabric layers of the reinforcement fibres 212 and by introducing a polymer matrix (e.g., comprising a resin and/or acting as a binder) during manufacture of the backing plate 200. The continuous fibre layer 240 and/or the continuous fibre layer 250 may be provided using any method and/or precursor which provides the described structure including continuous fibres, for example.

In some examples, as shown in Figures 7 to 9, all of the fibres in the layer 240 are aligned in the same direction. The fibres extend the full length L of the backing plate (i.e. in the x-axis as shown in the example of Figures 7 to 9 and as shown in the example of figures 10 to 12) and/or extend the full width W of the layer 250 of the backing plate (i.e. in the y-axis as shown in the example of figures 10 to 12). Put another way, a fibre 212 is continuous if it extends a full distance across the layer of the backing plate (e.g. the full length L or the full width W of the backing plate). Hence although, as shown in the figures, the length L and/or width W of the backing plate differs depending on where the length/width is measured, the fibres "extend the full length L of the backing plate" and/or "extend the full width W of the layer 250 of the backing plate" if they extend in a straight line from one location on the edge wall 206 across the length / width of the layer to terminate at another location on the edge wall.

Fibres 212 may be aligned with the Length L and/or Width W directions (i.e. X axis and/or Y axis respectively), as shown in the examples for layers 240, 250. However, fibres may be provided at an angle to the Length L and/or Width W directions (i.e. X axis and/or Y axis respectively), while still being in the same plane.

In a randomly orientated fibre layer 230 the fibres are provided at different angles to the Length L and Width W directions (i.e. X axis and Y axis respectively), and also may extend in the Z axis (i.e. the thickness T direction).

The backing plate 200 may comprise a layer 250 of woven continuous fibres (for example as shown in Figures 10 to 13). That is to say, in such a layer 250 at least some of the fibres 212 extend in a first direction and the remainder of the fibres extend in a second direction. For example, the relative angle between the first direction and the second direction may be between 0 degrees and 90 degrees. In some examples, the first direction is at right angles (i.e. perpendicular) to the second direction. In some examples, the first direction is at an angle less than 90 degrees relative to the second direction. In some examples, the layer 250 of woven continuous fibres may comprise a first set of fibres extending in the first direction, a second set of fibres extending in the second direction, and one or more other sets of fibres extending in respective directions different to the first direction and the second direction.

In one example of such a layer 250, for example as shown in Figures 10 to 13, at least some of the fibres 212 extending in the first direction and at least some of the fibres extending in the second direction are woven together. In some examples, the first direction may be the Length direction L, and the second direction may be the Width direction W (as indicated by the dotted arrows aligned in a X axis and Y axis direction respectively). Put another way, the fibres 212 extending in the first direction and the fibres extending in the second direction may be woven together such that the warp and weft of the fibre weave run the length L (along the x-axis) and width W (along the y-axis) of the plate 200.

In other examples, the layers may be stitched (i.e. provided as a Non-Crimp Fabric) and configured with an orientation that is optimised to achieve best performance.

In an alternative example, the fibres 212 extending in the first direction are provided in a first layer 250 and the fibres extending in the second direction are provided in an adjacent layer.

As shown in Figure 1, the backing plate 200 may comprise a layer 240 of reinforcement fibres 212 in which all of the fibres in the layer 240 are aligned in the same direction (i.e. along the x-axis, as shown in Figures 7 to 9) and which defines the engagement surface 208. The backing plate 200 may further comprise a layer 230 in which the fibres 212 are provided in a randomly oriented fibre lay-up pattern 230 (as shown in Figures 4 to 6), where the randomly orientated fibre layer 230 defines the friction material 302 mounting surface 210.The layers of the backing plate 200 may be integrally formed. For example, the layers of the backing plate may be co-moulded and hence form a mono-structure in which there is a step change in lay up / arrangement of the fibres from one layer to another.

In some examples, the composite material 214 of the backing plate 200 and the composite material 314 of the friction material 302 further comprise a binder material 400. In such an example, once the brake pad unit has been formed, the binder of the backing plate 200 has molecular continuity with the binder of the friction material 302 to thereby form a bond between the backing plate 200 and the friction material 302. In such an example, the backing plate 200 and friction material 302 may be co-moulded from an assembly of a backing plate 200 pre-cursor (e.g. fibres arranged in the desired orientation) and friction pad 300 pre-cursor (e.g. un-cured friction material, so that when cures a chemical bond is formed) to provide molecular continuity between the layer (or layers) of the backing plate 200 and the friction pad 300. That is to say, in some examples, the composite material 214 of the backing plate 200 and the composite material 314 of the friction material 302 comprise a common or compatible binder material 400 which during the forming process will flow between the backing plate pre-cursor and the friction material pre-cursor and thereby, when cured, provided a bond between the regions of backing plate material and friction material. Hence the binder material extends throughout the brake pad unit, acting to bind the fibres of the backing plate, the friction material of the brake pad, and to bind the backing plate section to the friction pad section.

In further examples, the composite material 214 of the backing plate 200 comprises a first binder material 410 and the composite material 314 of the friction material 302 further comprises a second binder material 420, the first binder material 410 being different to the second binder material 420. In such examples the friction material 302 may be bonded to the friction material mounting surface 210 of the backing plate 200. For example the friction material 302 may be bonded to the friction material mounting surface 210 of the backing plate 200 by an adhesive.

The fibres 212 may be provided with a binder (e.g. a resin) in a pre-impregnated form (i.e. "prepreg").

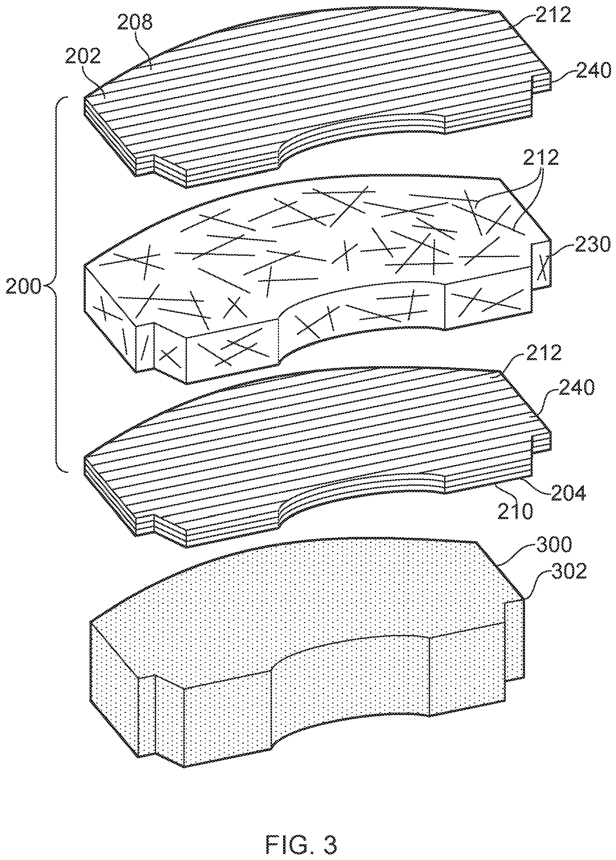

As shown in Figures 2, 3 the backing plate 200 may comprise a layer 240 of continuous reinforcement fibres 212 in which all of the fibres in the layer 240 are aligned in the same direction (as shown in Figures 7 to 9) and which defines the engagement surface 208. The backing plate 200 may comprise a layer 240 of continuous reinforcement fibres 212 in which all of the fibres in the layer 240 are aligned in the same direction (as shown in Figures 7 to 9) and which defines the friction material 302 mounting surface 210. The backing plate 200 may further comprise a layer 230 in which the fibres 212 are provided in a randomly oriented fibre lay-up pattern 230 (as shown in Figures 4 to 6), where the randomly orientated fibre layer 230 is sandwiched (ie provided) between the two continuous reinforcement fibres layers 240.

The backing plate 200 may comprise a layer 230 (as shown in Figures 4 to 6) of reinforcement fibres 212 provided in a randomly oriented fibre lay-up pattern which defines the engagement surface 208 in addition to a layer 230 of reinforcement fibres 212 provided in a randomly oriented fibre lay-up pattern which defines the friction material 302 mounting surface 210, and a layer 240 in which all of the fibres in the layer 240 are aligned in the same direction (as shown in Figures 7 to 9) provided between the engagement surface 208 layer and the friction material 302 mounting surface 210 layer.

Alternatively, instead of the layer 240 in which all of the fibres in the layer 240 are aligned in the same direction (as shown in Figures 7 to 9), there may be provided the layer 250 (as shown and described in relation to Figures 10 to 12) in which the fibres 212 are woven.

As shown in the example of Figure 13, the backing plate 200 may comprise, in series:
a woven layer 250 of continuous reinforcement fibres 212 (as shown in Figures 10 to 12) and which defines the engagement surface 208;
a layer 240 of continuous reinforcement fibres 212 in which all of the fibres in the layer 240 are aligned in the same direction (as shown in Figures 7 to 9);
a layer 230 in which the fibres 212 are provided in a randomly oriented fibre lay-up pattern 230 (as shown in Figures 4 to 6); and
a layer 240 of continuous reinforcement fibres 212 in which all of the fibres in the layer 240 are aligned in the same direction (as shown in Figures 7 to 9) and which defines the friction material 302 mounting surface 210.

Hence the random configuration 230 (for example as shown in figures 4 to 6), continuous configuration (for example as shown in figures 7 to 9) and woven layers (for example as shown in Figure 10 to 12) can be combined in any combination which includes at least one of a continuous layer 240 (for example as shown in Figures 7 to 9) and/or at least one of a woven layer 250 (for example as shown in Figures 10 to 12). Put another way, the backing plate 200 comprises at least a layer 240, 250 of reinforcement fibres 212 which are provided as continuous fibres which extend from a first point on the edge wall 206 to a second point on the edge wall 206.

The layers may be provided in a variety of different thicknesses, dependent on the required mechanical and thermal properties of the backing plate.

In at least some of the examples as herein described, the combination of materials results in a backing plate with a thermal conductivity which is less than 5 W/(m K). In at least some of the examples as herein described, the combination of materials results in a backing plate with a thermal conductivity which is less than 2 W/(m K).

Hence the brake pad unit is configured to reduce heat transfer between the sides of the backing plate 200. Hence, in use, when the brake pad unit 100 is installed in a disc brake assembly, it will insulate the disc brake assembly from heat generated on the friction pad 300. Hence a brake pad unit according to the present disclosure will thermally insulate brake pistons, brake fluid and other elements of the disc brake assembly more than brake pad units of the related art. For brake pad units of the related art comprising a metallic material may readily conduct heat to the disc brake assembly.

The backing plate 200 may have a thickness of at least 2mm. The backing plate may have a thickness of no more than 10mm. The backing plate may have a thickness of no more than 15mm. The backing plate may have a thickness of no more than 25mm.

Any one of the examples using the fibre arrangements as herein described, with a backing plate thickness of at least 2mm, but without needing to exceed a backing plate thickness of 10mm, 15mm or 25mm, may provide a backing plate 200 with a flexural modulus of at least 24 GPa. Put another way, a backing plate 200 according to the present disclosure may be configured to have a flexural modulus of at least 24 GPa. A backing plate 200 according to the present disclosure may be configured to have a flexural modulus of at least 40 GPa. A backing plate 200 according to the present disclosure may be configured to have a flexural modulus of not more than 200 GPa.

Any one of the example backing plate structures configured according to the fibre arrangements as herein described may exhibit no more than a 15% drop flexural modulus (Ef) between room temperature performance and at 130°C performance (for example following ISO14125 standard flexural test method and and/or less than 15% drop of storage modulus at the same conditions following DMA test according to ISO 6721 standard). Put another way, a backing plate 200 according to the present disclosure may be configured to exhibit no more than a 15% drop flexural modulus (Ef) between room temperature performance and at 130°C performance (for example following Iso-standard flexural 14125 test method and DMA test according to ISO 6721 standard).

Any one of the examples using the fibre arrangements as herein described, with a backing plate thickness of at least 2mm, but without needing to exceed a backing plate thickness of 10mm, 15mm or 25mm, may provide a backing plate 200 with a flexural strength of at least 250 MPa. Put another way, a backing plate 200 according to the present disclosure may be configured to have a flexural strength of at least 250 MPa. A backing plate 200 according to the present disclosure may be configured to have a flexural strength of at least 450 MPa. A backing plate 200 according to the present disclosure may be configured to have a flexural strength of not more than 1 GPa.

Any one of the examples using the fibre arrangements as herein described, with a backing plate thickness of at least 2mm, but without needing to exceed a backing plate thickness of 10mm, 15mm or 25mm, may provide a backing plate 200 with a compressive strength such that it is operable to deflect less than 0.7mm at a load of 3000N up to 250degC. Put another way, a backing plate 200 according to the present disclosure may be configured to deflect less than 0.7mm at a load of 3000N up to 250degC. In some examples, the fibres 212 are arranged such that the backing plate 200 has a compressive strength such that it is operable to deflect less than 5%, and preferably less than 2%, at a representative load equivalent to maximum braking, in use, up to 250degC.

In some examples, the fibres 212 may be arranged to provide compressive strength such that the brake pad unit 100 (including the friction pad 300 and the back plate 200) has a compressive strength such that it is operable to deflect less than 0.7mm at a load of 3000N up to 250degC.

Any one of the examples using the fibre arrangements as herein described, with a backing plate thickness of at least 2mm, but without needing to exceed a backing plate thickness of 10mm, 15mm or 25mm, may provide a backing plate 200 with a compressive strength such that it is operable to deflect less than 5% at a pressure of up to 80bar up to 250degC. Put another way, a backing plate 200 according to the present disclosure may be configured to deflect less than 5% (e.g. 0.7mm) at a pressure of 80bar at temperature up to 250degC.

Any one of examples of backing plates 200 using the fibre arrangements as herein described would retain its integrity during a pad shear test (tested via ISO 6312:2010 standard) at a minimum 362 psi (2.5 MPa) shear strength at room temperature.

Experiments have shown that any one of the examples using the fibre arrangements as herein described would achieve over 1200 psi (8.3 MPa) shear strength values.

As shown in Figure 9, the backing plate 200 may comprise several layers 240 of fibres provided in the same orientation, where the layers are integrally formed.

As shown in Figure 11, the backing plate 200 may comprise several layers 250 of woven fibres, where the layers are integrally formed.

The reinforcement fibre 212 may comprise at least one of glass S-glass E-glass, carbon, aramid, other types of mineral fibre (e.g. borosilicate).

The binder 400, 410, 420 (e.g. for the backing plate and/or friction material) may comprise filled or unfilled phenolic novolac or resol type resins, epoxy, polyesters, polyimide, BMI and/or any of the PAEK family of thermoplastics.

The friction pad 300 may comprise phenolic resins as a binder, including so-called organic, metallic, ceramic and any sintered metal type.

In all cases, at least some of the layers are integrally formed. That is to say, there is molecular continuity between at least some of the layers of the backing plate.

The layers of the backing plate and/or the backing plate and friction material may be formed as part of a single process such that, while the properties of one layer may differ to an adjacent or other layer in the structure, the layers form a unitary structure (i.e. a mono-structure). Hence molecules which define a region between adjacent layers form a continuous structure with both layers. That is to say, there is no join between the integrally formed (molecularly continuous) layers. Put another way, the mono-structure of the present disclosure may be defined as a unitary structure with regions (herein described as sections, volumes and/or layers) having different characteristic mechanical properties.

The layers of the backing pate 200 are made of the same material in so far as the constituent parts of the backing plate material of the different layers are the same, although the constituent parts may be present in different concentrations in some layers compared to other layers to thereby introduce differences in the properties (for example characteristic mechanical property) of the layers.

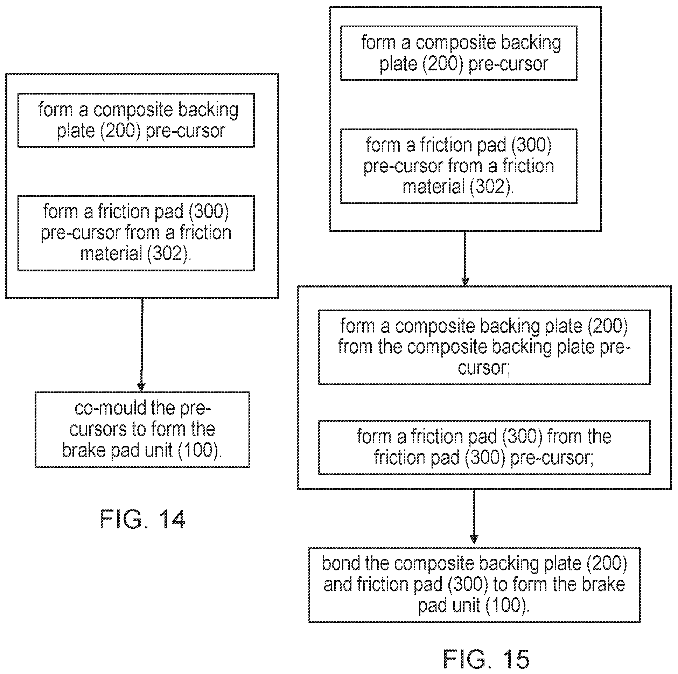

Figure 14 illustrates a first method of manufacture of a brake pad unit 100 as herein described for a disc brake assembly, comprising the steps of:
a. forming a composite backing plate 200 pre-cursor, which comprises fibres 212 and a binder;
b. forming a friction pad 300 pre-cursor from a friction material 302 and the binder;
c. co-moulding the pre-cursors to form the brake pad unit 100.
   The method may further comprise the step of arranging the precursors in a mould tool, and locating the mould tool in a heated press set at a temperature high enough to induce flow in the binder. The method may comprise the step of compressing the arranged precursors with a suitable force to provide adequate flow of the binder throughout the pre-cursors and to compact the moulding (and hence the pre-cursors).

Figure 15 illustrates an alternative method comprising the steps of forming a composite backing plate 200 from the composite backing plate pre-cursor, forming a friction pad 300 from the friction pad 300 pre-cursor, and bonding the composite backing plate 200 and friction pad 300 to form the brake pad unit 100.

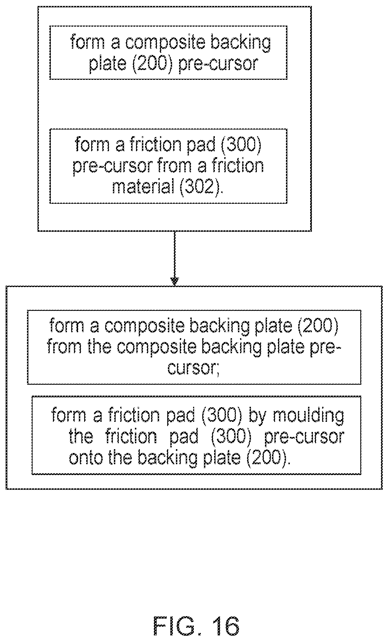

In some other examples, a method of manufacture of a brake pad unit 100 may comprise forming a composite backing plate 200 from the composite backing plate pre-cursor, and forming a friction pad 300 by moulding the friction pad 300 pre-cursor onto the backing plate 200. Figure 16 illustrates another alternative method of manufacture of a brake pad unit 100, according to some such examples.

For example, the friction pad 300 may be formed by moulding the friction pad 300 pre-cursor onto the friction material mounting surface 210. In some examples, a layer of an adhesive may be added onto the friction material mounting surface 210 before the friction pad 300 pre-cursor is moulded onto the friction material mounting surface 210. The adhesive layer may enhance the bond between the backing plate 200 and the friction pad 300.

Any of the disclosed methods may further comprise a step of subjecting the arrangement to a post-curing heating profile involving being held at a first temperature. The post curing profile may comprise a schedule of repeatedly increasing the temperature and holding the condition at the higher temperature for a predetermined amount of time.

Hence the manufacturing process may comprise compression moulding of backing plate 200 pre-cursor layers of fibres and frictional material in a combination of one of the examples of the present disclosure in one operation (e.g. co-moulding), or two operations (e.g. where the backing plate and friction pad are formed separately and then bonded). The various layers of material are arranged in a suitable mould tool which is placed in a heated press with heated platens set at a temperature high enough to induce flow in the resin system being used. For example, using a phenolic resin as a binder this would be 120 to 180°C whereas the PAEK family of resin binders would require a higher temperature up to 400°C. In such an example, using the PAEK family of resin binders, a separate moulding is used before adhering the backing plate 200 onto the friction pad 300.

Once heated thoroughly the loaded tool is compressed between heated platens with a suitable force (for example minimum 2 tons / square inch that equals 31 MPa) to provide adequate flow of the binder and compaction of the moulding. The moulded component may then be subjected to a post-curing heating profile involving being held at elevated temperature (for example minimum 3 hours at 150°C, but preferably 170°C+ for 1 to 30hours to improve heat stability. This post-curing cycle involves ramping up at various rates and then dwelling. The post-curing cycle may comprise controlled cooling.

Hence there is provided a brake pad unit 100 for a disc brake assembly with a configuration which means it may be produced to have a weight which is less, and stiffness which is at least as high as, examples of the related art.

Since the backing plate 200 is comprised of a composite material comprising reinforcement fibres and a binder throughout its structure (e.g. contains no metallic reinforcement material), a brake pad unit 100 according to the present disclosure is inherently less prone to corrosion related issues, and hence will have a longer operational life than examples of the related art which contain metallic reinforcement materials.

Thus, a brake pad unit 100 having a configuration according to the present invention may, for the same or lesser weight, be more resistant to warping and have the same or higher rigidity than examples of the related art by virtue of utilising woven and/or continuous fibre composite reinforcement which extend the length and the width of the backing plate 200.

The additional step of post-curing / "baking" the materials during manufacturing of the brake pad unit 100 provides additional warp resistance and rigidity.

The scope of the invention is defined by the claims.

## Claims

1. A brake pad unit (100) for a disc brake assembly, the brake pad unit (100) comprising a backing plate (200) and a friction pad (300), wherein :
the backing plate (200) comprises:
a first side (202) and a second side (204);
wherein:
the first side (202) defines an engagement surface (208) for engaging with the disc brake assembly;
the second side (204) defines a friction material (302) mounting surface (210);
the backing plate (200) comprises a first layer (240, 250) of reinforcement fibres (212) and a second layer (230) of reinforcement fibres (212), wherein the entirety of the backing plate (200) is formed from a composite material (214) comprising the reinforcement fibres (212) such that the composite material (214) is present throughout the entirety of the backing plate (200);
the reinforcement fibres (212) of the first layer (240, 250) are provided as continuous reinforcement fibres (212) which extend across the first layer (240, 250), each fibre (212) of the first layer (240, 250) starting at a first location on an edge wall (206) of said first layer (240, 250) and finishing at a second location on the edge wall (206) different to the first location;
the reinforcement fibres (212) of the second layer (230) are provided as non-continuous fibres (212) in a randomly oriented fibre lay-up pattern; and
the friction pad (300) comprises a friction material (302) provided on the friction material (302) mounting surface (210) of the backing plate (200).

2. A brake pad unit (100) as claimed in claim 1, wherein all of the fibres in the first layer (240) are aligned in the same direction.

3. A brake pad unit (100) as claimed in claim 1, wherein at least some of the fibres (212) in the first layer (250) extend in a first direction and the remainder of the fibres in the first layer (250) extend in a second direction, where the first direction is perpendicular to the second direction.

4. A brake pad unit (100) as claimed in claim 1, wherein at least some of the fibres (212) in the continuous reinforcement fibre layer (250) extend in a first direction and the remainder of the fibres in the continuous reinforcement fibre layer (250) extend in a second direction, where the first direction is at an angle less than 90 degrees relative to the second direction.

5. A brake pad unit (100) as claimed in any one of claims 3 or 4, wherein the fibres (212) extending in the first direction are provided in a first sub-layer and the fibres extending in the second direction are provided in a second sub-layer, wherein the first sub-layer and second sub-layer are integrally formed.

6. A brake pad unit (100) as claimed in any one of claims 3 to 5, wherein the fibres (212) extending in the first direction and the fibres extending in the second direction are woven together.

7. A brake pad unit (100) as claimed in any one of the preceding claims wherein the randomly orientated reinforcement fibres (212) of the second reinforcement fibre layer (230) have a length of at least 12mm but not more than 50mm; and/or
the said first continuous reinforcement fibre layer (240, 250) defines the engagement surface (208) and/or the friction material (302) mounting surface (210); and the first continuous reinforcement fibre layer (240, 250) is integrally formed with the or each other layers (230, 240, 250) of the backing plate (200).

8. A brake pad unit (100) as claimed in any one of claims 1 to 7 wherein the composite material (214) of the backing plate (200) and the composite material (314) of the friction material (302) further comprises a binder material (400); and
the binder material of the backing plate (200) has molecular continuity with the binder of the friction material (302) to thereby form a bond between the backing plate (200) and the friction material (302).

9. A brake pad unit (100) as claimed in any one of claims 1 to 8, wherein the composite material (214) of the backing plate (200) further comprises a first binder material (410); the composite material (314) of the friction material (302) further comprises a second binder material (420), the first binder material (410) being different to the second binder material (420); and the friction material (302) being bonded to the friction material mounting surface (210) of the backing plate (200).

10. A brake pad unit (100) as claimed in any one of the preceding claims, wherein the reinforcement fibre (212) comprises at least one of glass S-glass E-glass, carbon, aramid, other types of mineral fibre (e.g. borosilicate),
wherein, optionally, when dependent on any one of claims 8 and 9, the binder (400, 410, 420) comprises filled or unfilled phenolic novolac or resol type resins, epoxy, polyesters, polyimide, BMI and/or any of the PAEK family of thermoplastics.

11. A brake pad unit (100) as claimed in any one of claims 1 to 10, wherein the fibres (112) are arranged such that the flexural modulus of the backing plate (200) is at least 24 GPa and the flexural strength of the backing plate (200) is at least 250 MPa; and/or
wherein the fibres (112) are arranged such that the backing plate (200) has a compressive strength such that it is operable to deflect less than 0.7mm at a load of 3000N up to 250degC; and/or
wherein the backing plate (200) has a thickness of at least 2mm but no more than 10mm.

12. A brake pad unit (100) as claimed in claim 1, wherein the first layer (250) comprises:
a first set of the reinforcement fibres (212) extending in a first direction;
a second set of the reinforcement fibres (212) extending in a second direction different to the first direction; and
one or more other sets of the reinforcement fibres (212) extending in respective directions different to the first direction and the second direction.

13. A method of manufacture of a brake pad unit (100) for a disc brake assembly as described in claim 1 comprising:
forming a composite backing plate (200) pre-cursor formed from a composite material (214) comprising reinforcement fibres (212), wherein the composite backing plate (200) pre-cursor comprises a first layer (240, 250) of reinforcement fibres (212) and a second layer (230) of reinforcement fibres (212), wherein the composite material (214) is present throughout the entirety of the backing plate (200) pre-cursor;
wherein:
the reinforcement fibres (212) of the first layer (240, 250) are provided as continuous reinforcement fibres (212) which extend across the first layer (240, 250), each fibre (212) of the first layer (240, 250) starting at a first location on an edge wall (206) of said first layer (240, 250) and finishing at a second location on the edge wall (206) different to the first location;
the reinforcement fibres (212) of the second layer (230) are provided as non-continuous fibres (212) in a randomly oriented fibre lay-up pattern; and forming a friction pad (300) pre-cursor from a friction material (302).

14. A method of manufacture as claimed in claim 20:
comprising the steps of:
co-moulding the pre-cursors to form the brake pad unit (100),
wherein, optionally, the method comprises the steps of:
arranging the precursors in a mould tool;
locating the mould tool in a heated press set at a temperature high enough to induce flow in a binder of the precursors;
compressing the arranged precursors to provide flow of the binder and compaction of the moulding such that the pre-cursors are co-moulded;
subjecting the arrangement to a post-curing heating profile,
wherein, optionally:
the post curing profile comprises a schedule of repeatedly increasing the temperature and holding the condition at the higher temperature for a predetermined amount of time.

15. A method of manufacture as claimed in claim 13,
comprising the steps of:
forming a composite backing plate (200) from the composite backing plate pre-cursor;
forming a friction pad (300) from the friction pad (300) pre-cursor;
bonding the composite backing plate (200) and friction pad (300) to form the brake pad unit (100); or
comprising the steps of:
forming a composite backing plate (200) from the composite backing plate pre-cursor; and
forming a friction pad (300) by moulding the friction pad (300) pre-cursor onto the composite backing plate (200).

## Patentansprüche

1. Eine Bremsbelageinheit (100) für eine Scheibenbremsanordnung, wobei die Bremsbelageinheit (100) eine Trägerplatte (200) und einen Reibbelag (300) umfasst, wobei:
die Trägerplatte (200) umfasst:
eine erste Seite (202) und eine zweite Seite (204);
wobei:
die erste Seite (202) eine Eingriffsfläche (208) zum Eingriff mit der Scheibenbremsanordnung definiert;
die zweite Seite (204) eine Befestigungsfläche (210) für ein Reibmaterial (302) definiert;
die Trägerplatte (200) eine erste Schicht (240, 250) aus Verstärkungsfasern (212) und eine zweite Schicht (230) aus Verstärkungsfasern (212) umfasst, wobei die gesamte Trägerplatte (200) aus einem Verbundmaterial (214) gebildet ist, das die Verstärkungsfasern (212) umfasst, so dass das Verbundmaterial (214) in der gesamten Trägerplatte (200) vorhanden ist;
die Verstärkungsfasern (212) der ersten Schicht (240, 250) als durchgehende Verstärkungsfasern (212) bereitgestellt sind, die sich über die erste Schicht (240, 250) erstrecken, wobei jede Faser (212) der ersten Schicht (240, 250) an einer ersten Stelle an einer Kantenwand (206) der besagten ersten Schicht (240, 250) beginnt und an einer zweiten, von der ersten Stelle verschiedenen Stelle an der Kantenwand (206) endet;
die Verstärkungsfasern (212) der zweiten Schicht (230) als nicht-durchgehende Fasern (212) in einem zufällig orientierten Faserverbundmuster bereitgestellt sind; und
der Reibbelag (300) ein Reibmaterial (302) umfasst, das auf der Befestigungsfläche (210) für das Reibmaterial (302) der Trägerplatte (200) bereitgestellt ist.

2. Eine Bremsbelageinheit (100) nach Anspruch 1, wobei alle Fasern in der ersten Schicht (240) in derselben Richtung ausgerichtet sind.

3. Eine Bremsbelageinheit (100) nach Anspruch 1, wobei sich mindestens einige der Fasern (212) in der ersten Schicht (250) in einer ersten Richtung erstrecken und der Rest der Fasern in der ersten Schicht (250) sich in einer zweiten Richtung erstreckt, wobei die erste Richtung senkrecht zur zweiten Richtung ist.

4. Eine Bremsbelageinheit (100) nach Anspruch 1, wobei sich mindestens einige der Fasern (212) in der durchgehenden Verstärkungsfaserschicht (250) in einer ersten Richtung erstrecken und der Rest der Fasern in der durchgehenden Verstärkungsfaserschicht (250) sich in einer zweiten Richtung erstreckt, wobei die erste Richtung in einem Winkel von weniger als 90 Grad relativ zur zweiten Richtung ist.

5. Eine Bremsbelageinheit (100) nach einem der Ansprüche 3 oder 4, wobei die Fasern (212), die sich in der ersten Richtung erstrecken, in einer ersten Unterschicht bereitgestellt sind und die Fasern, die sich in der zweiten Richtung erstrecken, in einer zweiten Unterschicht bereitgestellt sind, wobei die erste Unterschicht und die zweite Unterschicht einstückig ausgebildet sind.

6. Eine Bremsbelageinheit (100) nach einem der Ansprüche 3 bis 5, wobei die Fasern (212), die sich in der ersten Richtung erstrecken, und die Fasern, die sich in der zweiten Richtung erstrecken, miteinander verwoben sind.

7. Eine Bremsbelageinheit (100) nach einem der vorhergehenden Ansprüche, wobei die zufällig orientierten Verstärkungsfasern (212) der zweiten Verstärkungsfaserschicht (230) eine Länge von mindestens 12 mm, aber nicht mehr als 50 mm haben; und/oder die besagte erste durchgehende Verstärkungsfaserschicht (240, 250) die Eingriffsfläche (208) und/oder die Befestigungsfläche (210) für das Reibmaterial (302) definiert; und die erste durchgehende Verstärkungsfaserschicht (240, 250) integral mit der oder jeder anderen Schicht (230, 240, 250) der Trägerplatte (200) ausgebildet ist.

8. Eine Bremsbelageinheit (100) nach einem der Ansprüche 1 bis 7, wobei das Verbundmaterial (214) der Trägerplatte (200) und das Verbundmaterial (314) des Reibmaterials (302) ferner ein Bindemittelmaterial (400) umfassen; und das Bindemittelmaterial der Trägerplatte (200) eine molekulare Kontinuität mit dem Bindemittel des Reibmaterials (302) aufweist, um dadurch eine Verbindung zwischen der Trägerplatte (200) und dem Reibmaterial (302) zu bilden.

9. Eine Bremsbelageinheit (100) nach einem der Ansprüche 1 bis 8, wobei das Verbundmaterial (214) der Trägerplatte (200) ferner ein erstes Bindemittelmaterial (410) umfasst; das Verbundmaterial (314) des Reibmaterials (302) ferner ein zweites Bindemittelmaterial (420) umfasst, wobei sich das erste Bindemittelmaterial (410) vom zweiten Bindemittelmaterial (420) unterscheidet; und das Reibmaterial (302) mit der Befestigungsfläche (210) für das Reibmaterial der Trägerplatte (200) verbunden ist.

10. Eine Bremsbelageinheit (100) nach einem der vorhergehenden Ansprüche, wobei die Verstärkungsfaser (212) mindestens eines von Glas, S-Glas, E-Glas, Kohlenstoff, Aramid, anderen Arten von Mineralfasern (z.B. Borosilikat) umfasst, wobei, optional, in Abhängigkeit von einem der Ansprüche 8 und 9, das Bindemittel (400, 410, 420) gefüllte oder ungefüllte Phenol-Novolac- oder Resol-Harze, Epoxid, Polyester, Polyimid, BMI und/oder eines aus der PAEK-Familie von Thermoplasten umfasst.

11. Eine Bremsbelageinheit (100) nach einem der Ansprüche 1 bis 10, wobei die Fasern (112) so angeordnet sind, dass das Biegemodul der Trägerplatte (200) mindestens 24 GPa und die Biegefestigkeit der Trägerplatte (200) mindestens 250 MPa beträgt; und/oder wobei die Fasern (112) so angeordnet sind, dass die Trägerplatte (200) eine Druckfestigkeit aufweist, so dass sie bei einer Last von 3000 N bis zu 250 °C um weniger als 0,7 mm durchgebogen werden kann; und/oder wobei die Trägerplatte (200) eine Dicke von mindestens 2 mm, aber nicht mehr als 10 mm aufweist.

12. Eine Bremsbelageinheit (100) nach Anspruch 1, wobei die erste Schicht (250) umfasst: einen ersten Satz von Verstärkungsfasern (212), die sich in einer ersten Richtung erstrecken; einen zweiten Satz von Verstärkungsfasern (212), die sich in einer zweiten, von der ersten Richtung verschiedenen Richtung erstrecken; und einen oder mehrere weitere Sätze von Verstärkungsfasern (212), die sich in jeweiligen Richtungen erstrecken, die sich von der ersten Richtung und der zweiten Richtung unterscheiden.

13. Ein Verfahren zur Herstellung einer Bremsbelageinheit (100) für eine Scheibenbremsanordnung, wie in Anspruch 1 beschrieben, umfassend:
Herstellen eines Vorläufers einer Verbund-Trägerplatte (200), der aus einem Verbundmaterial (214) gebildet ist, das Verstärkungsfasern (212) umfasst, wobei der Vorläufer der Verbund-Trägerplatte (200) eine erste Schicht (240, 250) aus Verstärkungsfasern (212) und eine zweite Schicht (230) aus Verstärkungsfasern (212) umfasst, wobei das Verbundmaterial (214) im gesamten Vorläufer der Trägerplatte (200) vorhanden ist;
wobei:
die Verstärkungsfasern (212) der ersten Schicht (240, 250) als durchgehende Verstärkungsfasern (212) bereitgestellt sind, die sich über die erste Schicht (240, 250) erstrecken, wobei jede Faser (212) der ersten Schicht (240, 250) an einer ersten Stelle an einer Kantenwand (206) der besagten ersten Schicht (240, 250) beginnt und an einer zweiten, von der ersten Stelle verschiedenen Stelle an der Kantenwand (206) endet;
die Verstärkungsfasern (212) der zweiten Schicht (230) als nicht-durchgehende Fasern (212) in einem zufällig orientierten Faserverbundmuster bereitgestellt sind; und
Herstellen eines Vorläufers eines Reibbelags (300) aus einem Reibmaterial (302).

14. Ein Herstellungsverfahren nach Anspruch 20:
umfassend die Schritte:
Gemeinsames Formen der Vorläufer zur Bildung der Bremsbelageinheit (100),
wobei das Verfahren optional die Schritte umfasst:
Anordnen der Vorläufer in einem Formwerkzeug;
Platzieren des Formwerkzeugs in einer beheizten Presse, die auf eine Temperatur eingestellt ist, die hoch genug ist, um einen Fluss in einem Bindemittel der Vorläufer zu induzieren;
Zusammendrücken der angeordneten Vorläufer, um einen Fluss des Bindemittels und eine Verdichtung der Formmasse zu bewirken, so dass die Vorläufer gemeinsam verformt werden;
Unterziehen der Anordnung einem Nachhärtungs-Heizprofil,
wobei optional:
das Nachhärtungs-Heizprofil einen Zeitplan umfasst, bei dem die Temperatur wiederholt erhöht und der Zustand bei der höheren Temperatur für eine vorbestimmte Zeitdauer gehalten wird.

15. Ein Herstellungsverfahren nach Anspruch 13,
umfassend die Schritte:
Herstellen einer Verbund-Trägerplatte (200) aus dem Vorläufer der Verbund-Trägerplatte;
Herstellen eines Reibbelags (300) aus dem Vorläufer des Reibbelags (300);
Verbinden der Verbund-Trägerplatte (200) und des Reibbelags (300) zur Bildung der Bremsbelageinheit (100); oder
umfassend die Schritte:
Herstellen einer Verbund-Trägerplatte (200) aus dem Vorläufer der Verbund-Trägerplatte; und
Herstellen eines Reibbelags (300) durch Formen des Vorläufers des Reibbelags (300) auf die Verbund-Trägerplatte (200).

## Revendications

1. - Unité de plaquette de frein (100) pour un ensemble frein à disque, l'unité de plaquette de frein (100) comprenant une plaque de support (200) et une plaquette de friction (300), dans laquelle :
la plaque de support (200) comprend :
un premier côté (202) et un second côté (204) ;
dans laquelle :
le premier côté (202) définit une surface d'engagement (208) pour s'engager avec l'ensemble frein à disque ;
le second côté (204) définit une surface de montage (210) de matériau de friction (302) ;
la plaque de support (200) comprend une première couche (240, 250) de fibres de renforcement (212) et une seconde couche (230) de fibres de renforcement (212), la totalité de la plaque de support (200) étant formée d'un matériau composite (214) comprenant les fibres de renforcement (212) de telle sorte que le matériau composite (214) est présent à travers la totalité de la plaque de support (200) ;
les fibres de renforcement (212) de la première couche (240, 250) sont disposées en tant que fibres de renforcement continues (212) qui s'étendent à travers la première couche (240, 250), chaque fibre (212) de la première couche (240, 250) commençant à un premier endroit sur une paroi de bord (206) de ladite première couche (240, 250) et se terminant à un second endroit sur la paroi de bord (206) différent du premier endroit ;
les fibres de renforcement (212) de la seconde couche (230) sont disposées en tant que fibres non continues (212) dans un motif d'empilement de fibres orientées de manière aléatoire ; et
la plaquette de friction (300) comprend un matériau de friction (302) disposé sur la surface de montage (210) de matériau de friction (302) de la plaque de support (200).

2. - Unité de plaquette de frein (100) selon la revendication 1, dans laquelle toutes les fibres dans la première couche (240) sont alignées dans la même direction.

3. - Unité de plaquette de frein (100) selon la revendication 1, dans laquelle au moins certaines des fibres (212) dans la première couche (250) s'étendent dans une première direction et le reste des fibres dans la première couche (250) s'étendent dans une seconde direction, la première direction étant perpendiculaire à la seconde direction.

4. - Unité de plaquette de frein (100) selon la revendication 1, dans laquelle au moins certaines des fibres (212) dans la couche de fibres de renforcement continues (250) s'étendent dans une première direction et le reste des fibres dans la couche de fibres de renforcement continues (250) s'étendent dans une seconde direction, la première direction étant à un angle inférieur à 90 degrés par rapport à la seconde direction.

5. - Unité de plaquette de frein (100) selon l'une quelconque des revendications 3 ou 4, dans laquelle les fibres (212) s'étendant dans la première direction sont disposées dans une première sous-couche et les fibres s'étendant dans la seconde direction sont disposées dans une seconde sous-couche, la première sous-couche et la seconde sous-couche étant formées d'un seul tenant.

6. - Unité de plaquette de frein (100) selon l'une quelconque des revendications 3 à 5, dans laquelle les fibres (212) s'étendant dans la première direction et les fibres s'étendant dans la seconde direction sont tissées ensemble.

7. - Unité de plaquette de frein (100) selon l'une quelconque des revendications précédentes, dans laquelle les fibres de renforcement (212) orientées de façon aléatoire de la seconde couche de fibres de renforcement (230) ont une longueur d'au moins 12 mm mais de pas plus de 50 mm ; et/ou
ladite première couche de fibres de renforcement continues (240, 250) définit la surface d'engagement (208) et/ou la surface de montage (210) de matériau de friction (302) ; et la première couche de fibres de renforcement continues (240, 250) est formée d'un seul tenant avec la ou chacune des autres couches (230, 240, 250) de la plaque de support (200).

8. - Unité de plaquette de frein (100) selon l'une quelconque des revendications 1 à 7, dans laquelle le matériau composite (214) de la plaque de support (200) et le matériau composite (314) du matériau de friction (302) comprennent en outre un matériau liant (400) ; et
le matériau liant de la plaque de support (200) a une continuité moléculaire avec le liant du matériau de friction (302) pour former ainsi une liaison entre la plaque de support (200) et le matériau de friction (302).

9. - Unité de plaquette de frein (100) selon l'une quelconque des revendications 1 à 8, dans laquelle le matériau composite (214) de la plaque de support (200) comprend en outre un premier matériau liant (410) ; le matériau composite (314) du matériau de friction (302) comprend en outre un second matériau liant (420), le premier matériau liant (410) étant différent du second matériau liant (420) ; et le matériau de friction (302) étant collé à la surface de montage de matériau de friction (210) de la plaque de support (200).

10. - Unité de plaquette de frein (100) selon l'une quelconque des revendications précédentes, dans laquelle la fibre de renforcement (212) comprend au moins l'une parmi les fibres de : verre verre S verre E, carbone, aramide, autres types de fibre minérale (par exemple, borosilicate),
dans laquelle, facultativement, lorsqu'elle dépend de l'une quelconque des revendications 8 et 9, le liant (400, 410, 420) comprend des résines phénoliques chargées ou non chargées de type novolaque ou résol, époxy, polyesters, polyimide, polybismaléimides (BMI) et/ou tout autre membre de la famille polyaryléthercétones (PAEK) de thermoplastiques.

11. - Unité de plaquette de frein (100) selon l'une quelconque des revendications 1 à 10, dans laquelle les fibres (112) sont disposées de telle sorte que le module de flexion de la plaque de support (200) soit d'au moins 24 GPa et que la résistance à la flexion de la plaque de support (200) soit d'au moins 250 MPa ; et/ou
dans laquelle les fibres (112) sont disposées de telle sorte que la plaque de support (200) ait une résistance à la compression telle qu'elle soit capable de dévier de moins de 0,7 mm sous une charge de 3000 N jusqu'à 250 degrés Celsius ; et/ou
dans laquelle la plaque de support (200) a une épaisseur d'au moins 2 mm mais de pas plus de 10 mm.

12. - Unité de plaquette de frein (100) selon la revendication 1, dans laquelle la première couche (250) comprend :
un premier ensemble des fibres de renforcement (212) s'étendant dans une première direction ;
un second ensemble des fibres de renforcement (212) s'étendant dans une seconde direction différente de la première direction ; et
un ou plusieurs autres ensembles des fibres de renforcement (212) s'étendant dans des directions respectives différentes de la première direction et de la seconde direction.

13. - Procédé de fabrication d'une unité de plaquette de frein (100) pour un ensemble frein à disque telle que décrite dans la revendication 1, comprenant :
former un précurseur de plaque de support composite (200) formé à partir d'un matériau composite (214) comprenant des fibres de renforcement (212), le précurseur de plaque de support composite (200) comprenant une première couche (240, 250) de fibres de renforcement (212) et une seconde couche (230) de fibres de renforcement (212), le matériau composite (214) étant présent à travers la totalité du précurseur de plaque de support (200) ;
dans lequel :
les fibres de renforcement (212) de la première couche (240, 250) sont disposées en tant que fibres de renforcement continues (212) qui s'étendent à travers la première couche (240, 250), chaque fibre (212) de la première couche (240, 250) commençant à un premier endroit sur une paroi de bord (206) de ladite première couche (240, 250) et se terminant à un second endroit sur la paroi de bord (206) différent du premier endroit;
les fibres de renforcement (212) de la seconde couche (230) sont disposées en tant que fibres non continues (212) dans un motif d'empilement de fibres orientées de manière aléatoire ; et
former un précurseur de plaquette de friction (300) à partir d'un matériau de friction (302).

14. - Procédé de fabrication selon la revendication 20, comprenant les étapes consistant à :
co-mouler les précurseurs pour former l'unité de plaquette de frein (100),
dans lequel, facultativement, le procédé comprend les étapes consistant à :
arranger les précurseurs dans un outil de moulage ;
placer l'outil de moulage dans une presse chauffée réglée à une température suffisamment élevée pour induire un écoulement dans un liant des précurseurs ;
comprimer les précurseurs arrangés pour assurer un écoulement du liant et un compactage du moulage de telle sorte que les précurseurs soient co-moulés ;
soumettre l'arrangement à un profil de chauffage post-durcissement,
dans lequel, facultativement :
le profil post-durcissement comprend un programme d'augmentation répétée de la température et de maintien de la condition à la température plus élevée pendant un laps de temps prédéterminé.

15. - Procédé de fabrication selon la revendication 13, comprenant les étapes consistant à :
former une plaque de support composite (200) à partir du précurseur de plaque de support composite ;
former une plaquette de friction (300) à partir du précurseur de plaquette de friction (300) ;
lier la plaque de support composite (200) et la plaquette de friction (300) pour former l'unité de plaquette de frein (100) ; ou
comprenant les étapes consistant à :
former une plaque de support composite (200) à partir du précurseur de plaque de support composite ; et
former une plaquette de friction (300) par moulage du précurseur de plaquette de friction (300) sur la plaque de support composite (200).
